# EUROPEAN PATENT APPLICATION

(11) **EP 2 937 798 A1**
(43) Date of publication of application: **28.10.2015**
(21) Application number: 13895444.1
(22) Date of filing: 21.11.2013
(51) Int. Cl.: G06F 19/00

(54) **SYSTEM FOR ANALYZING RISK OF COLLISION BASED ON CSM**

(30) Priority: 28.10.2013 KR 20130128504
(71) Applicant: Korea Aerospace Research Institute, Daejeon 305-806 (KR)
(72) Inventor: KIM, Hae-Dong, Daejeon 305-806 (KR); SEONG, Jae Dong, Daejeon 305-804 (KR); LEE, Sang-Cherl, Daejeon 305-806 (KR); CHO, Dong-Hyun, Daejeon 305-360 (KR)
(74) Representative: Grünecker Patent- und Rechtsanwälte PartG mbB
(86) International application number: PCT/KR2013/010612
(87) International publication number: WO 2015/064818

(57) **Abstract**

The present invention relates to a conjunction summary message (CSM)-based analysis system for a collision that includes space debris which moves in space, a user satellite which is operated by a user, a joint space operations center server which receives information collected through a space debris monitoring satellite and radar or an optical camera and calculates orbit information and covariance information about the user satellite and the space debris, and a collision risk analysis server which analyzes a collision risk between the satellite and the space debris based on the orbit information and the covariance information calculated by the joint space operations center server, thereby having effects on improving precise prediction of collision between the satellite and the space debris based on a CSM informing the collision risk between the satellite and the space debris while operating a global space monitoring network, and significantly reducing a total time taken in determining and analyzing a precise orbit of the space debris and making an optimized collision-avoidance maneuver plan, through the effective user interface and system.

## Description

### [Technical Field]

The present invention relates to a conjunction summary message (CSM)-based analysis system for a collision risk, and more particularly to a CSM-based analysis system for a collision risk of space debris, which automatically analyzes the collision risk of an operator satellite based on a CSM informing the collision risk between the satellite and space debris while operating a global space monitoring network, enables manual analysis for the automatic analysis results into detailed collision risks in consideration of user convenience and efficiency, quickly reflects results of determining orbits of space objects or satellites to procedures of analyzing the detailed collision risks, allows the operator to establish various optimized collision-avoidance maneuvers while considering limited conditions of mission operations, and includes a display for depicting situations before and after the collision and situations before and after the maneuver in a three-dimension (3D).

### [Background Art]

The following patent reference is related to a conventional method of determining collision-avoidance direction control, which acquires initial data about a target object, generates a plurality of preliminary maneuvers based on initial data, and provides the preliminary maneuvers optimized to avoid the collision, but has a problem that prediction of collision between a satellite and space debris is somewhat low.

### [Related Art]

### [Patent Reference]

Korean Patent No. 10-0646856(2006. 11. 09)

### [Disclosure]

### [Technical Problem]

The present invention is conceived to solve the foregoing problems, and an aspect of the present invention is to provide a CSM-based analysis system for a collision risk of space debris, which automatically analyzes the collision risk of an operator satellite based on a CSM of the joint space operations center server of United States joint space operations center (JSpOC) for alerting the collision risk between the satellite and space debris while operating a global space monitoring network, enables manual analysis for the automatic analysis results into detailed collision risks in consideration of user convenience and efficiency, quickly reflects results of determining orbits of space objects or satellites to procedures of analyzing the detailed collision risks, allows the operator to establish various optimized collision-avoidance maneuvers while considering limited conditions of mission operations, and includes a display for depicting situations before and after the collision and situations before and after the maneuver in a three-dimension (3D).

### [Technical Solution]

In accordance with one aspect of the present invention, there is provided a conjunction summary message (CSM)-based analysis system for a collision risk, the system comprising: space debris which moves in space; a satellite which collects data about space debris; a joint space operations center server which receives information collected by the satellite and calculates orbit information and covariance information about the satellite and the space debris; and a collision risk analysis server which analyzes the collision risk between the satellite and the space debris based on the orbit information and the covariance information calculated by the joint space operations center server, the collision risk analysis server comprising: an interface which receives a conjunction summary message (CSM) from the joint space operations center server, and transmits and receives various data; a CSM analyzer which automatically analyzes the conjunction summary message transmitted from the joint space operations center server of United States joint space operations center (JSpOC) for alerting the collision risk between the satellite and the space debris, and manually analyzes a certain collision event; a collision risk calculator which automatically calculates the collision risk between the satellite and the space debris in accordance with analysis results of the CSM analyzer; an orbit determiner/analyzer which precisely calculates an orbit based on the tracking data about the user satellite or the space debris acquired by the radar or the optical camera, and determines precise orbit information comprising covariance; a multipurpose collision-avoidance maneuver calculator which makes a collision-avoidance maneuver plan optimized with regard to a plurality of pieces of space debris when a collision-avoidance maneuver is needed based on the analysis results of the CSM analyzer; and a collision risk scheduler which sets up a preliminary collision risk analysis threshold and detailed collision risk analysis thresholds with regard to the user satellite in accordance with collision probability, the minimum approaching distance and the minimum distance in a radial direction, and sets up time for executing a collision risk automatic analysis into every hour with respect to each user satellite.

### [Advantageous Effects]

A CSM-based analysis system according to embodiments of the present invention have effects on improving precise prediction of collision between the satellite and the space debris based on a CSM informing the collision risk between the satellite and the space debris while operating a global space monitoring network, and significantly reducing a total time taken in determining and analyzing a precise orbit of the space debris and making an optimized collision-avoidance maneuver plan, through the effective user interface and system.

### [Description of Drawings]

Fig. 1 is a block diagram of a CSM-based analysis system for a collision risk according to an embodiment of the present invention, and
Fig. 2 is a block diagram of a collision risk analysis server of a CSM-based analysis system for a collision risk according to an embodiment of the present invention.

### [Best Mode]

Hereinafter, exemplary embodiments according to the present invention will be described with reference to accompanying drawings. Also, terms and words used in the following description and claims have to be interpreted by not the limited meaning of the typical or dictionary definition, but the meaning and concept corresponding to the technical idea of the present invention on the assumption that the inventor can properly define the concept of the terms in order to describe his/her own invention in the best way.

Accordingly, the disclosure in the specification and the configurations shown in the drawings are just preferred embodiments of the present invention and do not cover all the technical idea of the present invention. Thus, it should be appreciated that such embodiments may be replaced by various equivalents and modifications at a point of time when the present application is filed.

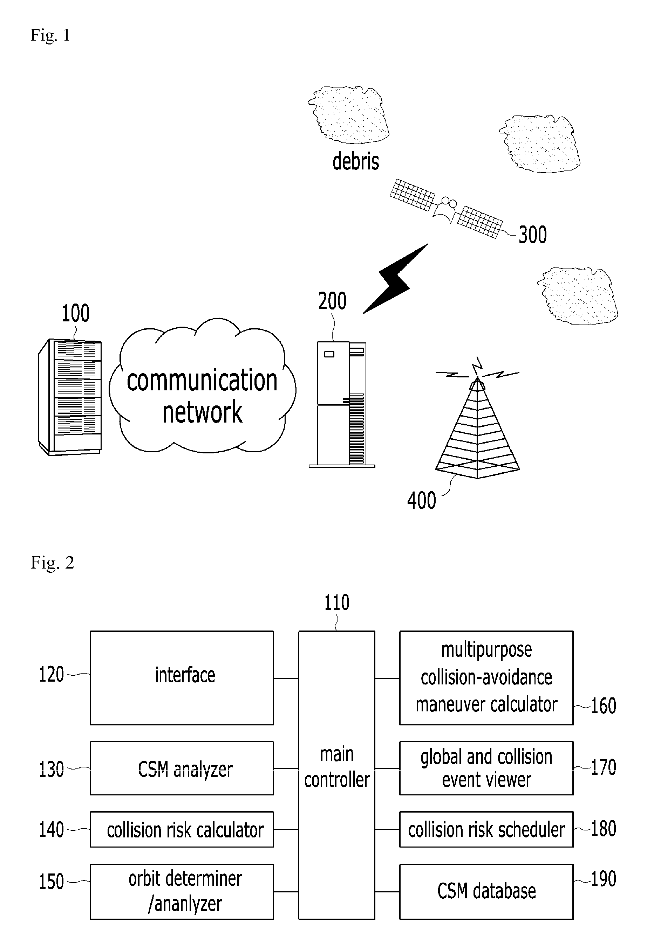

Fig. 1 is a block diagram of a CSM-based analysis system for a collision risk according to an embodiment of the present invention, and

As shown in Fig. 1, a CSM-based analysis system for a collision risk according to an embodiment of the present invention includes a CSM-based collision risk analysis server 100, a joint space operations center server 200 and a satellite 300.

The satellite 300 collects various pieces of information about the coordinates, the sizes, the elements, etc. of a plurality of pieces of surrounding debris and transmits the information to the ground joint space operations center server 200.

The joint space operations center server 200 composes a conjunction summary message based on the information collected from a global space monitoring network resource including the user satellite 300, a radar or an optical camera 400.

Further, the collision risk analysis server 100 analyzes, generates and displays various pieces of information such as a collision risk, approaching movement, etc. between the satellite operated by a user and the space debris based on the conjunction summary message.

For reference, the CSM-based analysis system for a collision risk according to an embodiment of the present invention has a system architecture of 'Tree' easy to directly connect with a flight dynamics system that has to secure extendability of the system, facilitate the subsequent modification and run parallel with of a collision risk analysis of the space debris.

Referring to Fig. 2, a collision risk analysis server of a CSM-based analysis system for a collision risk will be described in more detail.

For reference, Fig. 2 is a block diagram of a collision risk analysis server of a CSM-based analysis system for a collision risk according to an embodiment of the present invention.

As shown in Fig. 2, the collision risk analysis server of the CSM-based analysis system for a collision risk according to an embodiment of the present invention includes a main controller 110, an interface 120, a CSM analyzer 130, a collision risk calculator 140, an orbit determiner/analyzer 150, a multipurpose collision-avoidance maneuver calculator 160, a global and collision event viewer170, a collision risk scheduler 180, and a CSM database (DB) 190.

The interface 120 automatically receives the CSM and various external data from the exterior the joint space operations center server 200, and automatically transmits and receives system operation results to and from the exterior.

Also, the interface 120 sets up access and automatic receiving time to automatically transmit the CSM and various required data through an external site, and sets up time to automatically transmit the corresponding data to the external site requiring various result data calculated through the system.

The CSM analyzer 130 automatically analyzes the conjunction summary message (CSM) transmitted from the U.S. joint space operations center (JSpOC) informing the collision risk between the satellite 300 operated by a user and the space debris, and manually analyzes a certain collision event.

That is, the CSM analyzer 130 automatically receives the CSM if the joint space operations center server 200 generates the CSM about the user satellite 300, analyzes the received CSM, extracts the orbit information and covariance information about the user satellite 300 and space debris from the CSM, and transmits the extracted information to the collision risk calculator 140.

The collision risk calculator 140 automatically calculates the collision risk between the user satellite 300 and the space debris in accordance with the analysis results of the CSM analyzer 130.

That is, the collision risk calculator 140 calculates the collision probability and the approaching distance between the satellite and the space debris, based on the orbit information and covariance information about the user satellite 300 and the space debris transmitted from the CSM analyzer 130.

Also, the collision risk calculator 140 further calculates the minimum approaching distance and approaching distances in radial, in-track and cross-track direction, based on the orbit information and covariance information about the user satellite 300 and the space debris, thereby analyzing a risk propensity about each collision event.

If the calculation result of the collision risk calculator 140 goes beyond a preset collision risk threshold, an operator of the CSM-based the collision risk analysis server 100 in the CSM-based analysis system for the collision risk according to an embodiment of the present invention employs the CSM for determining whether to make the collision-avoidance maneuver plan and whether to perform precise orbit calculation of an approaching object, through an input device connected to the interface 120

The orbit determiner/analyzer 150 uses the tracking data about the user satellite 300 or space debris acquired by the radar or the optical camera to perform the precise orbit calculation, and determines precise orbit information including the covariance.

The CSM analyzer 130 receives the CSM about a certain satellite, and if a result from analyzing the detailed collision risk shows that the precise orbit determination and prediction are needed, the orbit determiner/analyzer 150 recalculates and predicts the precise orbit based on the orbit information and covariance information about the user satellite 300 and the approaching object with regard to the collision risk event selected from the CSM analyzer 130 by the operator.

If the radar tracking data and the optical tracking data about the user satellite 300 or the space debris are received, the data is processed to acquire the precise orbit information and the covariance information.

The orbit determiner/analyzer 150 may transmit the acquired precise orbit information and covariance to be selected and recalculated in the collision risk calculator 140.

The multipurpose collision-avoidance maneuver calculator 160 establishes the collision-avoidance maneuver plan optimized with regard to the plurality of pieces of space debris if the collision-avoidance maneuver is needed in the results from analyzing the collision risk.

If the collision risk calculator 140 determines that the collision risk is high since the detailed collision risk result exceeds a certain threshold, the corresponding collision events may be transmitted to the multipurpose collision-avoidance maneuver calculator 160, and the optimized collision-avoidance maneuver plan is selected to be established among individual collision events shown in the multipurpose collision-avoidance maneuver calculator 160.

The multipurpose collision-avoidance maneuver calculator 160 not only makes a collision-avoidance maneuver plan optimized for a single object to avoid a collision risk with regard to a single approaching object, but also makes a collision-avoidance maneuver plan optimized for a plurality of objects to avoid a collision risk with regard to a plurality of approaching objects.

The multipurpose collision-avoidance maneuver calculator 160 may take limited conditions to operations of the user satellite 300 into account, and more specifically may select the purposes such as the collision probability, the minimum approaching distance, and the radial direction distance when the user satellite 300 avoids the collision with the space debris, and at the same time consider the limited conditions to the operations together with the selected purposes, that is, the maximum allowable fuel usage, an avoidance maneuver start time, a ground track allowable error, etc.

The multipurpose collision-avoidance maneuver calculator 160 may perform a Monte-Carlo simulation in consideration of an initial orbit error of the satellite, an error of a thruster, etc.

The global and collision event viewer170 displays an approaching movement and a collision risk event of the user satellite to the space debris in space in the form of a two-dimension (2D) and a three-dimension (3D).

Through a global viewer function The global and collision event viewer170 allows a current state of space objects including operating user satellites and other space debris to be displayed on the 3D display, and allows movement between a view point of the earth and view points of the user satellites to be displayed.

Meanwhile, through a collision event viewer function, the global and collision event viewer170 allows approaching situations to the collision event selected by an operator to be displayed in the 3D and 2D, so that the operator can visually determine a geometrical approaching direction with regard to collision situations, and situations before and after the approach.

Also, the global and collision event viewer170 arranges a current state of the collision risk analysis and the nearest collision event situations with regard to the user's respective satellites and displays them on a main screen, and arranges the automatic orbit determination execution with regard to the respective satellites and the current state of normal termination and displays them on the main screen.

The collision risk scheduler 180 may set up a preliminary collision risk analysis threshold and detailed collision risk analysis thresholds with regard to the user satellite 300 in accordance with collision probability, the minimum approaching distance and the minimum distance in a radial direction, and sets up time for executing a collision risk automatic analysis into every hour with respect to each user satellite.

The main controller 110 maintains organic connection among the foregoing elements, and particularly controls transmission between the elements and stores the CSM received through the interface 130 in the conjunction summary message DB 190.

Also, the main controller 110 may retrieve the past conjunction summary message about the satellite or space object, in which a user is interested, in the collision CSM DB 190 and thus determine the propensity for the collision risk.

Although some embodiments have been described herein with reference to the accompanying drawings, it will be understood by those skilled in the art that these embodiments are provided for illustration only, and various modifications, changes, alterations and equivalent embodiments can be made without departing from the scope of the present invention. Therefore, the scope and sprit of the present invention should be defined only by the accompanying claims and equivalents thereof.

### (References)

110 : main controller
120 : interface
130 : CSM analyzer
140 : collision risk calculator
150 : orbit determiner/analyzer
160 : multipurpose collision-avoidance maneuver calculator
170 : global and collision event viewer
180 : collision risk scheduler
190 : CSM database (DB)

## Claims

1. A conjunction summary message (CSM)-based analysis system for a collision risk, the system comprising:
space debris which moves in space;
a user satellite which monitors the space debris in the sky and collects data;
a radar or an optical camera which monitors the space debris over the earth and collects tracking data;
a joint space operations center server which receives information collected by the user satellite and calculates orbit information and covariance information about the user satellite and the space debris to compose a conjunction summary message; and
a collision risk analysis server which analyzes the collision risk between the user satellite and the space debris based on the orbit information and the covariance information calculated by the joint space operations center server.

2. The CSM-based analysis system for the collision risk according to claim 1, wherein the collision risk analysis server comprises:
an interface which receives a conjunction summary message (CSM) composed by the joint space operations center server, and transmits and receives various data;
a CSM analyzer which automatically analyzes the conjunction summary message transmitted from the joint space operations center server of United States joint space operations center (JSpOC) for alerting the collision risk between the user satellite and the space debris, and manually analyzes a certain collision event;
a collision risk calculator which automatically calculates the collision risk between the user satellite and the space debris in accordance with analysis results of the CSM analyzer;
an orbit determiner/analyzer which precisely calculates an orbit based on the tracking data about the user satellite or the space debris acquired by the radar or the optical camera, and determines precise orbit information comprising covariance;
a multipurpose collision-avoidance maneuver calculator which makes a collision-avoidance maneuver plan optimized with regard to a plurality of pieces of space debris when a collision-avoidance maneuver is needed based on the analysis results of the CSM analyzer; and
a collision risk scheduler which sets up a preliminary collision risk analysis threshold and detailed collision risk analysis thresholds with regard to the user satellite in accordance with collision probability, the minimum approaching distance and the minimum distance in a radial direction, and sets up time for executing a collision risk automatic analysis into every hour with respect to each user satellite.

3. The CSM-based analysis system for the collision risk according to claim 2, wherein the collision risk analysis server further comprises a global and collision event viewer which displays an approaching movement and a collision risk event of the user satellite to the space debris in space in the form of a two-dimension (2D) and a three-dimension (3D).

4. The CSM-based analysis system for the collision risk according to claim 2, wherein the CSM analyzer automatically receives the CSM through the interface 120 if the joint space operations center server generates the CSM with regard to the user satellite, and extracts the orbit information and the covariance information about the user satellite and the space debris from the received CSM through the analysis of the received CSM.

5. The CSM-based analysis system for the collision risk according to claim 4, wherein the collision risk calculator calculates the collision probability and the approaching distance between the satellite and the space debris based on the orbit information and the covariance information about the user satellite and the space debris transmitted from the CSM analyzer.

6. The CSM-based analysis system for the collision risk according to claim 4, wherein the collision risk calculator analyzes a risk propensity about each collision event by further calculating approaching distances in radial, in-track and cross-track directions, and the minimum approaching distance based on the orbit information and the covariance information about the user satellite and the space debris.

7. The CSM-based analysis system for the collision risk according to claim 4, wherein the multipurpose collision-avoidance maneuver calculator makes a collision-avoidance maneuver plan optimized with regard to the collision event if a detailed collision risk result of the collision risk calculator exceeds the threshold.

8. The CSM-based analysis system for the collision risk according to claim 7, wherein the multipurpose collision-avoidance maneuver calculator makes a collision-avoidance maneuver plan optimized for a single object to avoid a collision risk with regard to a single approaching object, and makes a collision-avoidance maneuver plan optimized for a plurality of objects to avoid a collision risk with regard to a plurality of approaching objects.

9. The CSM-based analysis system for the collision risk according to claim 7, wherein the multipurpose collision-avoidance maneuver calculator makes a collision-avoidance maneuver plan against the space debris while simultaneously considering the maximum allowable fuel usage, an avoidance maneuver start time, and a ground track allowable error.

10. The CSM-based analysis system for the collision risk according to claim 3, wherein the global and collision event viewer displays a current state of space objects including the user satellites and the space debris in the form of the 3D, and displays movement between a view point of the earth and view points of the user satellites through a global viewer function.
